# EUROPEAN PATENT SPECIFICATION

(11) **EP 2 998 867 B1**
(45) Date of publication and mention of the grant of the patent: **18.09.2019**
(21) Application number: 14818249.6
(22) Date of filing: 17.06.2014
(51) Int. Cl.: G06F 12/0897, G06F 12/0804, G06F 12/0866, G06F 12/0879

(54) **DATA WRITING METHOD AND MEMORY SYSTEM**
DATENSCHREIBVERFAHREN UND SPEICHERSYSTEM
PROCÉDÉ D'ÉCRITURE DE DONNÉES ET SYSTÈME DE MÉMOIRE

(30) Priority: 29.06.2013 CN 201310270239
(43) Date of publication of application: 23.03.2016
(73) Proprietor: Huawei Technologies Co., Ltd., Longgang District Shenzhen, Guangdong 518129 (CN)
(72) Inventor: XIA, Fei, Shenzhen Guangdong 518129 (CN); JIANG, Dejun, Shenzhen Guangdong 518129 (CN); XIONG, Jin, Shenzhen Guangdong 518129 (CN)
(74) Representative: Kreuz, Georg Maria
(86) International application number: PCT/CN2014/080073
(87) International publication number: WO 2014/206220

(56) References cited:
- EP-A1- 1 607 869
- CN-A- 102 012 850
- CN-A- 102 662 992
- CN-A- 102 725 741
- CN-A- 102 999 441
- JP-B2- 3 204 295
- US-A1- 2009 138 663
- US-A1- 2009 265 514
- US-A1- 2012 260 041

## Description

### TECHNICAL FIELD

Embodiments of the present invention relates to computer technologies, and in particular, to a data writing method and a memory system.

### BACKGROUND

An existing memory system basically includes a memory controller (MC), a memory device, and the like. The memory controller and the memory device exchange data by using the double data rate (DDR) protocol. The memory controller writes data into the memory device in a burst (burst) write manner, and a size of a data block on which one burst write is performed is a memory data bus width; a cache (cache) and the memory system exchange data in unit of cache line (cache line), and a size of data read or written each time is a size of one cache line of a last level cache (LLC) in the cache. Therefore, the memory controller needs to perform multiple consecutive burst writes to write data of one cache line into the memory device, where a quantity of consecutive burst writes is called a burst length (BL).

In the DDR3 protocol, a BL is generally equal to 8, and a size of a data block in one burst write is used as a granularity to divide one cache line into multiple data blocks. For example, if a size of one cache line of the LLC is 64 bytes and the memory data bus width is 64 bits, when burst write data appears on a data bus, the memory controller needs to perform eight burst writes in consecutive four clock cycles to write data of one cache line of the LLC into the memory device. However, actually, when data of one cache line of the LLC is written into the memory device, many data blocks are not changed. During a writing process, it is possible that invalid data (unchanged data) is written into the memory device in some burst writes. As a result, a speed of writing valid data (changed data) is low, and writing a large amount of invalid data leads to an increase in power consumption of the memory system, thereby reducing performance of the memory system.

In a BC4 (burst chop 4) technology supported by the DDR3 protocol, when the memory controller writes data into the memory device, a total of four burst writes occur in two consecutive clock cycles, and there is no burst write in subsequent two clock cycles, to write a first half or a latter half of data of one cache line into the memory device. During this process, within the first two clock cycles, it is also possible that in a write manner in which whether data in a data block is changed or not is not considered, invalid data is written into the memory device in some burst writes. As a result, a speed of writing valid data is low, and writing a large amount of invalid data leads to an increase in power consumption of the memory system, thereby reducing performance of the memory system.

US 2009/0138663 A1 discloses a cache memory which capable of variably adjusting a burst length based on the n-bit dirty value and an minimum burst length to transmit write-back data to a main memory.

EP 1 607 869 A1 discloses a data cache system comprising a memory controller for selecting a data burst size for transferring data from a data cache to system memory based upon memory characteristics associated with the system memory.

US 2012/0260041 A1 discloses a method of dealing with eviction and cleaning operations in a cache system.

US20090265514 A1 discloses a processing system including a memory and a cache memory is provided with a page status unit for providing a cache controller with a page open indication indicating one or more open pages of data values in memory.

JP 3204295 B2 discloses a cache memory having a plurality of dirty bit storage units corresponding to each of the plurality of cache lines, and said plurality of cache lines for storing a predetermined amount of data each, lower as viewed from the cache memory in the cache memory system including a data write back means for writing back data relative to the level of the storage area are stored in the cache line, the table representing the relationship between the time required for writing back the data size to be written back and further wherein the cache memory, with each of said plurality of cache lines are divided into a predetermined number of sub-blocks.

### SUMMARY

The present invention is defined in the appended claims to which reference should be made. The embodiments or examples of the following description which are not covered by the appended claims are considered as not being part of the invention according to this description.

Embodiments of the present invention provide a data writing method and a memory system, where whether data in a data block of a cache line is changed is differentiated and a write is performed only on a changed data block, so that objectives to quickly write valid data, reduce power consumption of a memory system, and improve performance of the memory system are achieved.

According to a first aspect, an embodiment of the present invention provides a data writing method, which is applied to a memory system including at least a cache, a last level cache, a memory controller and a memory device and includes:
receiving, by the memory controller, change information sent by the cache, where the change information is information that is generated after the cache divides a first to-be-written cache line cache line of the last level cache (LLC) into at least two data blocks and that is used to indicate whether data in each of the at least two data blocks is changed; and
for each unchanged data block in which data is not changed as indicated by the change information, skipping sending, by the memory controller according to the change information, a column address corresponding to each unchanged data block and data corresponding to each unchanged data block to the memory device; and for each changed data block in which data is changed as indicated by the change information, sending, by the memory controller according to the change information, a column address corresponding to each changed data block and data corresponding to each changed data block to the memory device; and
writing, by the memory device according to the column address corresponding to each changed data block and the data corresponding to each changed data block, data of a burst length into each changed data block, where the burst length is equal to a quantity of the at least two data blocks;
wherein for each changed data block in which data is changed as indicated by the change information, the method further comprises:
   if the quantity of the changed data blocks of the first to-be-written cache line is less than the burst length, sending the column address and the data corresponding to each changed data block of the first to-be-written cache line and a column address and data corresponding to each changed data block of at least one second to-be-written cache line to the memory device, wherein a sum of a quantity of the changed data blocks of the at least one second to-be-written cache line and the quantity of the changed data blocks of the first to-be-written cache line is less than or equal to the burst length; and
   performing, by the memory device according to each column address of the first to-be-written cache line and each column address of the at least one second to-be-written cache line, the data write of the burst length on each changed data block of the first to-be-written cache line and each changed data block of the at least one second to-be-written cache line, wherein the second to-be-written cache line is a to-be-written cache line except the first to-be-written cache line in the LLC;
wherein the first to-be-written cache line and the at least one second to-be-written cache line are in a same row.

According to a second aspect, an embodiment of the present invention provides a memory system, including at least a cache, a last level cache, a memory controller and a memory device, where:
the memory controller is configured to: receive change information sent by the cache,
where the change information is information that is generated after the cache divides a first to-be-written cache line cache line of the last level cache (LLC) into at least two data blocks and that is used to indicate whether data in each of the at least two data blocks is changed; for each unchanged data block in which data is not changed as indicated by the change information, skip sending, according to the change information, a column address corresponding to each unchanged data block and data corresponding to each unchanged data block to the memory device; and for each changed data block in which data is changed as indicated by the change information, send, according to the change information, a column address corresponding to each changed data block and data corresponding to each changed data block to the memory device; and
the memory device is configured to write, according to the column address corresponding to each changed data block and the data corresponding to each changed data block, data of a burst length into each changed data block, where the burst length is equal to a quantity of the at least two data blocks;
wherein the memory controller is further configured to: if the quantity of the changed data blocks of the first to-be-written cache line is less than the burst length, send the column address and the data corresponding to each changed data block of the first to-be-written cache line and a column address and data corresponding to each changed data block of at least one second to-be-written cache line to the memory device, wherein a sum of a quantity of the changed data blocks of the at least one second to-be-written cache line and the quantity of the changed data blocks of the first to-be-written cache line is less than or equal to the burst length; and
the memory device is configured to perform, according to each column address of the first to-be-written cache line and each column address of the at least one second to-be-written cache line, the data write of the burst length on each changed data block of the first to-be-written cache line and each changed data block of the at least one second to-be-written cache line, wherein the second to-be-written cache line is a to-be-written cache line except the first to-be-written cache line in the LLC;
wherein the first to-be-written cache line and the at least one second to-be-written cache line are in a same row.

In the data writing method and the memory system provided in the embodiments of the present invention, a memory controller sends, according to change information sent by a cache, a column address and data to a memory device only for a data block in which data is changed, so that the memory device performs a data write on each changed data block and does not perform a write on a data block in which data is not changed. Therefore, objectives to quickly write valid data, reduce power consumption of a memory system, and improve performance of the memory system are achieved.

### BRIEF DESCRIPTION OF DRAWINGS

To describe the technical solutions in the embodiments of the present invention or in the prior art more clearly, the following briefly introduces the accompanying drawings required for describing the embodiments or the prior art.
FIG. 1 is a flowchart of a data writing method according to the present invention;
FIG. 2 is a schematic diagram showing working of an LLC in the data writing method according to the present invention;
FIG. 3 is a schematic diagram showing working of a memory controller in the data writing method according to the present invention;
FIG. 4 is a schematic diagram showing working of a memory device in the data writing method according to the present invention;
FIG. 5 is a sequence diagram of write command combining in the data writing method according to the present invention; and
FIG. 6 is a schematic structural diagram of a memory system according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention.

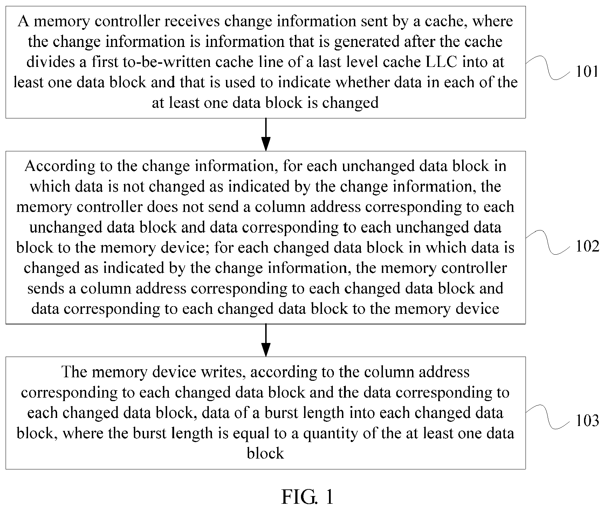

FIG. 1 is a flowchart of a data writing method according to Embodiment 1 of the present invention. This embodiment is applied to a scenario in which data is written into a memory system including at least a memory controller and a memory device. Specifically, this embodiment includes the following steps:
101. The memory controller receives change information sent by a cache, where the change information is information that is generated after the cache divides a first to-be-written cache line cache line of a last level cache (LLC) into at least one data block and that is used to indicate whether data in each of the at least one data block is changed.

A cache cache is located between a central processing unit (central processing unit, CPU) and a large-capacity memory system and has a relatively high access rate. In this step, the cache divides the first to-be-written cache line cache line of the last level cache (LLC) into at least one data block, and adds one flag bit to each of the at least one data block, where the flag bit indicates whether data in the data block is changed, one cache line needs multiple flag bits, and multiple flag bits of each cache line constitute change information indicating whether data in each of the at least one data block of the cache line is changed. For example, one cache line is divided into multiple data blocks by using a memory data bus width as a granularity, and one flag bit that is represented by 0 or 1 is added to each of the multiple data blocks, where 0 indicates that data in the data block is not changed, that is, a value of the data block is not changed; and 1 indicates that the data in the data block is changed, that is, the value of the data block is changed. Flag bits of each cache line constitute a changed block vector (changed block vector, CBV), that is, change information, of the cache line. Specifically, assuming that a size of one cache line is 64 bytes and the memory data bus width is 64 bits, one cache line may be divided into eight data blocks, and a burst length BL is equal to 8, that is, a size of one CBV is eight bits.

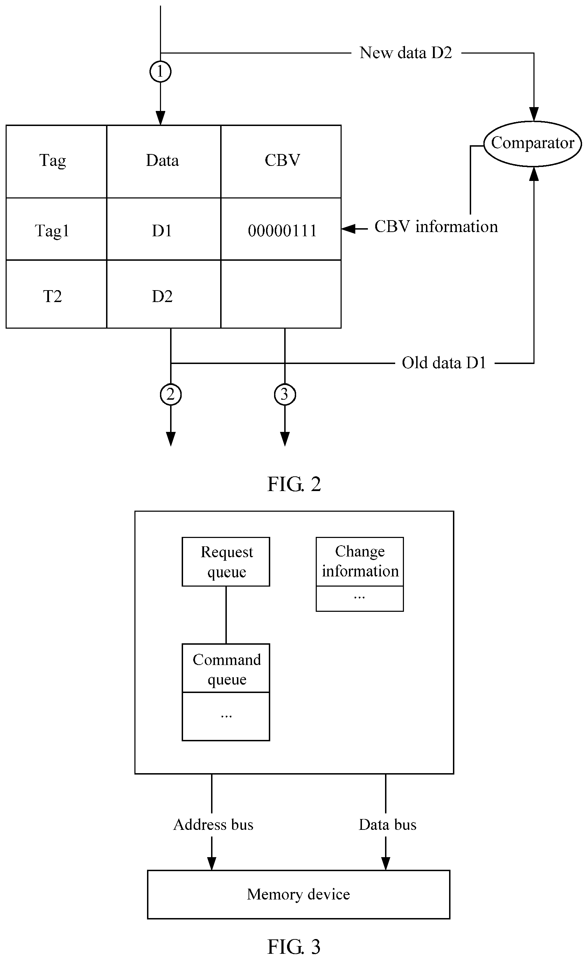

FIG. 2 is a schematic diagram showing working of an LLC in the data writing method according to the present invention. As shown in FIG. 2, when an upper-level cache of the cache writes data into one cache line of the LLC, the upper-level cache first reads old data (old data) in the cache line and compares the old data with to-be-written data (new data); if data in one data block is not changed, the upper-level cache sets a flag bit of this data block to 0; if the data is changed, the upper-level cache sets the flag bit of this data block to 1. When the LLC writes the data of the cache line to the memory system, CBV information corresponding to the cache line is transferred to the memory controller in the memory system, and the memory controller receives the CBV information, that is, receives corresponding change information. Taking a data block whose tag is Tag1 as an example, the upper-level cache executes the following steps: (1) when writing data into a cache line of the LLC, read old data D1 in the data block, first compares D1 with to-be-written data D2 by using a comparator, and record a comparison result in a CBV. Likewise, the upper-level cache reads data of other data blocks in the cache line, compares the data with new data that is to be written to these data blocks, and record a comparison result of each of the other data blocks in the CBV, to obtain CBV information of this cache line, that is, change information. When the LLC executes the following step: (2) write data into the memory system, that is, send a write request to the memory system to write data, the LLC simultaneously executes the following step: (3) send change information of the to-be-written cache line to the memory system.

102. According to the change information, for each unchanged data block in which data is not changed as indicated by the change information, the memory controller does not send a column address corresponding to each unchanged data block and data corresponding to each unchanged data block to the memory device; for each changed data block in which data is changed as indicated by the change information, the memory controller sends a column address corresponding to each changed data block and data corresponding to each changed data block to the memory device.

In this step, the memory controller in the memory system determines, according to the received change information, whether it is required to perform a write on each data block of the first to-be-written cache line. Specifically, refer to FIG. 3.

FIG. 3 is a schematic diagram showing working of a memory controller in the data writing method according to the present invention. Referring to FIG. 3, the memory controller in the memory system includes a request queue (transaction queue), a command queue (command queue), and the like. The write request of the LLC is first placed in the request queue, the memory controller converts the write request to a specific command for operating the memory device and stores the command in the command queue. The memory controller determines, according to the change information of the first to-be-written cache line, whether it is required to perform a write on each of the at least one data block of the first to-be-written cache line. Specifically, for an unchanged data block in which data is not changed, a burst write is not performed; for a changed data block in which data is changed, a column address and data corresponding to the changed data block is sent to the memory controller each beat by using an address bus, a data bus, and the like. Because data is transmitted in both a rising edge and a falling edge of one clock cycle in the DDR technology and a data frequency of the data bus is twice a clock frequency of the data bus, each beat is half a clock cycle.

103. The memory device writes, according to the column address corresponding to each changed data block and the data corresponding to each changed data block, data of a burst length into each changed data block, where the burst length is equal to a quantity of the at least one data block.

Generally, a quantity of data blocks into which the first to-be-written cache line is divided is a quantity of consecutive burst writes. In this step, the memory device performs the data write of the burst length on each changed data block according to each received column address and each piece of received data.

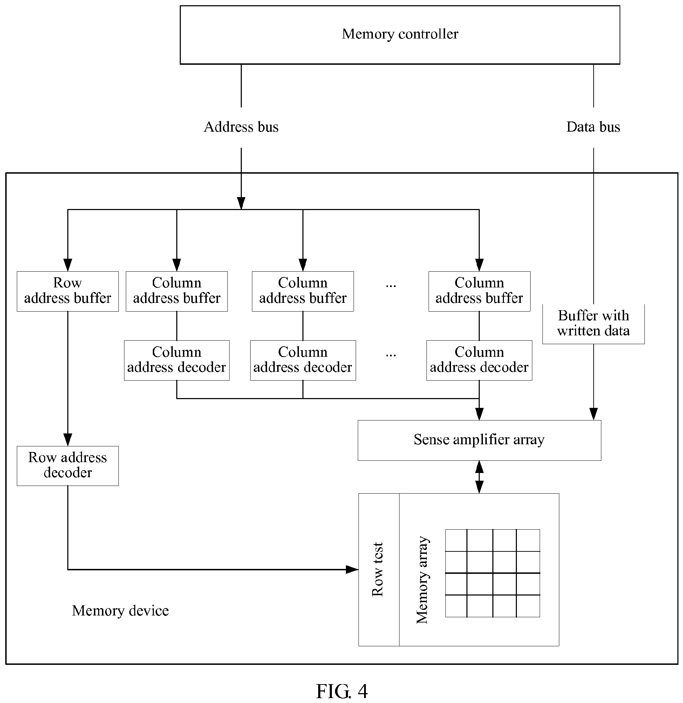

Optionally, compared with that one memory device has only one column address buffer and one column decoder in the prior art, the memory device in this embodiment includes multiple column address buffers and multiple column decoders. FIG. 4 is a schematic diagram showing working of a memory device in the data writing method according to the present invention. Referring to FIG. 4, in this embodiment, the memory device includes a row address buffer (row address buffer), a row address decoder (row decoder), column address buffers (column address buffer) whose quantity is equal to the burst length, column address decoders (column decoder) whose quantity is equal to the burst length, a sense amplifier array (sense amplifier array, SAA), a memory array (memory array), a buffer with written data (data in buffer) and the like. For each changed data block, the memory device performs a data write by using an independent column address buffer and an independent column decoder. Each time data is written, multiple column addresses sent by the memory controller are stored in different column address buffers and decoded concurrently by using different column decoders, different columns in the SAA are selected, data is written into these selected columns, and finally the data in the SAA is written into the memory array.

In the data writing method provided in this embodiment of the present invention, a memory controller sends, according to change information sent by a cache, a column address and data to a memory device only for a data block in which data is changed, so that the memory device performs a data write on each changed data block and does not perform a write on a data block in which data is not changed. Therefore, objectives to quickly write valid data, reduce power consumption of a memory system, and improve performance of the memory system are achieved.

Optionally, in the foregoing Embodiment 1, the memory controller determines, according to the change information, whether it is required to perform a write on each of the at least one data block. For each changed data block in which data is changed as indicated by the change information, if a quantity of the changed data blocks of the first to-be-written cache line is equal to the burst length, the memory controller sends the column address corresponding to each changed data block and the data corresponding to each changed data block to the memory device. Correspondingly, the memory device performs, according to each column address, the data write of the burst length on each changed data block of the first to-be-written cache line.

Specifically, the cache divides the first to-be-written cache line of the LLC into at least one data block and performs one burst write on each of the at least one data block, where a quantity of data blocks obtained after the division is a quantity of burst writes, that is, the burst length. In this embodiment, if the quantity of the changed data blocks is equal to the burst length, that is, data in all the data blocks obtained after the division is changed, the change information received by the memory controller indicates that data in all the data blocks of the cache line is changed. In this case, for each of the at least one data block of the first to-be-written cache line, the memory controller sends a column address and data corresponding to the data block to the memory device; the memory device stores multiple received column addresses in different column address buffers, performs decoding concurrently by using different column decoders, selects different columns in the SAA, writes data to these selected columns, and finally writes the data in the SAA into the memory array. In this way, a write is performed on each of the at least one data block of the first to-be-written cache line. For example, the first to-be-written cache line is divided into eight data blocks by using the memory data bus width as a granularity, and data in all the eight data blocks is changed. Therefore, the memory controller sends eight column addresses and corresponding data to the memory device. Eight column address buffers and eight column decoders are disposed on the memory device, each column address buffer stores one column address, and the decoders corresponding to the column addresses perform decoding concurrently.

Optionally, in the foregoing Embodiment 1, the memory controller determines, according to the change information, whether it is required to perform a write on each data block. For each changed data block in which data is changed as indicated by the change information, if a quantity of the changed data blocks of the first to-be-written cache line is less than the burst length, the memory controller sends the column address and the data corresponding to each changed data block of the first to-be-written cache line and a column address and data corresponding to each changed data block of at least one second to-be-written cache line to the memory device. A sum of a quantity of the changed data blocks of the at least one second to-be-written cache line and the quantity of the changed data blocks of the first to-be-written cache line is less than or equal to the burst length. Correspondingly, the memory device performs, according to each column address of the first to-be-written cache line and each column address of the at least one second to-be-written cache line, the data write of the burst length on each changed data block of the first to-be-written cache line and each changed data block of the at least one second to-be-written cache line, where the second to-be-written cache line is a to-be-written cache line except the first to-be-written cache line in the LLC.

Generally, the cache divides the first to-be-written cache line of the LLC into at least one data block and performs one burst write on each of the at least one data block, where a quantity of data blocks obtained after the division is a quantity of burst writes, that is, the burst length. In this embodiment, if the quantity of the changed data blocks is less than the burst length, data in only some data blocks of the data blocks obtained after the division is changed. In this case, when performing command scheduling, the memory controller combines write commands, and completes multiple write in a clock cycle of one fixed burst length in a manner of combining the write commands, thereby preventing waste of the clock cycle, reducing power consumption of the memory system, and improving performance of the memory system.

Specifically, write requests that are sent by the LLC to the memory controller and used to request that data of a size of the cache line is written are first stored in the request queue, and the memory controller converts these write requests to write commands for operating the memory device and stores the write commands in the command queue. When the memory device sends a write command of the first to-be-written cache line, if the memory controller discovers, according to the change information of the first to-be-written cache line, that the quantity of the changed data blocks of the cache line is less than the burst length, a write command corresponding to the at least one second to-be-written cache line is selected from the command queue. A sum of a quantity of changed data blocks of the at least one second to-be-written cache line and the quantity of the changed data blocks of the first to-be-written cache line is less than or equal to the burst length. In burst writes whose quantity is equal to the BL, the memory controller sends a column address and data corresponding to one changed data block of the first to-be-written cache line to the memory device each beat; after column addresses and data corresponding to the changed data blocks of the first to-be-written cache line are sent, the memory controller subsequently continues to send a column address and data corresponding to one changed data block of the second to-be-written cache line to the memory device each beat, and repeats this process until data is written into data blocks whose quantity is equal to the BL, or until write commands that can be combined cannot be found in the command queue, that is, a quantity of data blocks into which data is written is less than the BL.

It should be noted that, if the quantity of the changed data blocks of the first to-be-written cache line is less than the burst length, and the write command corresponding to the first to-be-written cache line and the write command corresponding to the at least one second to-be-written cache line need to be combined during the data writing process, the following needs to be met: the sum of the quantity of the changed data blocks of the at least one second to-be-written cache line and the quantity of the changed data blocks of the first to-be-written cache line is less than or equal to the burst length, where the first to-be-written cache line and the at least one second to-be-written cache line correspond to the write commands that can be combined. In addition, the write commands further needs to meet the following condition: the first to-be-written cache line and the at least one second to-be-written cache line are in a same row of a same storage group Bank, and there is no read command of the same row in the LLC. That is, the write command corresponding to the first to-be-written cache line and the write commands corresponding to the at least one second to-be-written cache line are used for a write in the same row of the same storage group Bank, and there is no read request of the same row in the write commands corresponding to the at least one second to-be-written cache line. In this case, referring to FIG. 4, the memory device further includes a row test module (row test), which is configured to test whether write commands are used to perform a data write in a same row of a same storage group Bank.

Specifically, it is assumed that a size of one cache line of the LLC is 64 bytes, the memory data bus width is 64 bits, and the burst length BL is equal to 8. Table 1 shows information about commands in the command queue of the memory controller: three write commands are used to operate a same Bank, write commands Write 1 and Write3 are used for a write in a row Row1, and a write command Write2 is used for a write in row Row2.

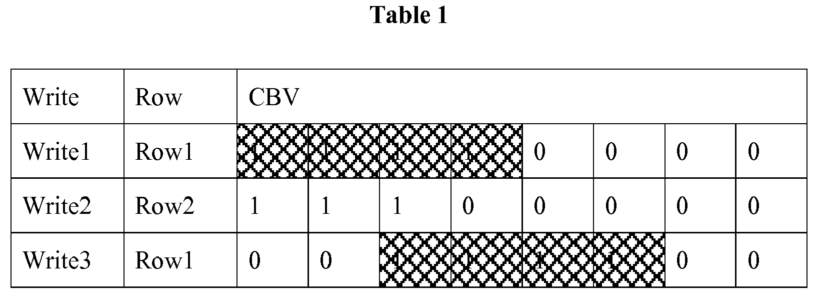

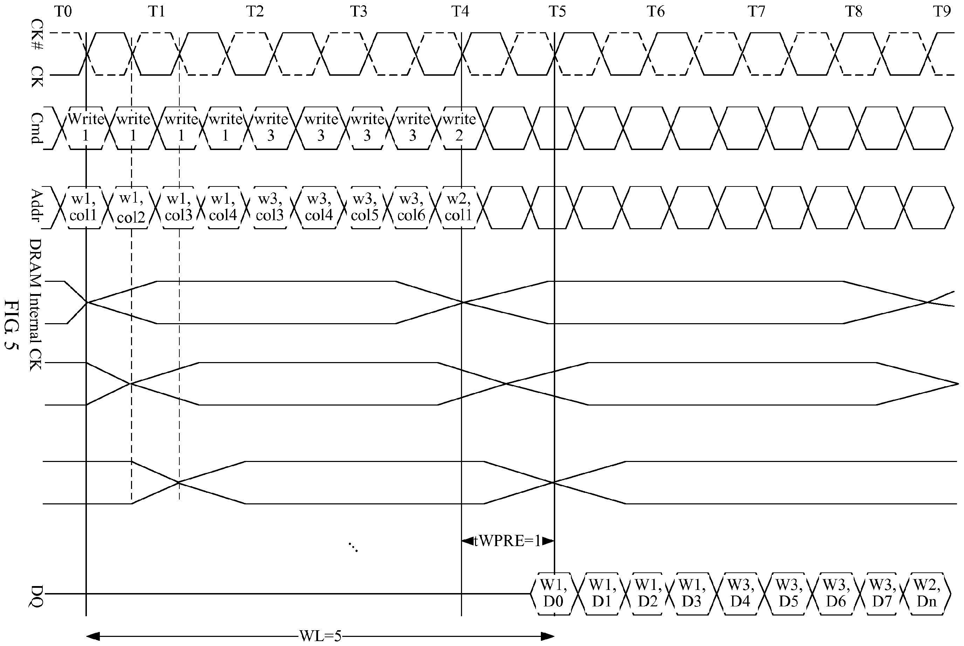

As can be seen from Table 1, Write 1 and Write3 are used for the write in the same row; CBV, namely change information, indicates that a sum of a quantity of changed data blocks of a cache line corresponding to Write 1 and a quantity of changed data blocks of a cache line corresponding to Write3 (as shown in the cross-hatching in Table 1) is equal to 8. Therefore, write command combining is performed for Write 1 and Write3; the memory controller schedules Write2 after completing scheduling Write 1 and Write3. Specifically, refer to FIG. 5.

FIG. 5 is a sequence diagram of write command combining in the data writing method according to the present invention. As shown in FIG. 5, in the first four beats, that is, rising edges and falling edges of clock cycles TO and T1, the memory controller sends Write 1 and column address coll, col2, col3 and col4; in subsequent four beats, that is, rising edges and falling edges of clock cycles T2 and T3, the memory controller sends Write3 and column addresses col3, col4, col5 and col6. Then, the memory controller sends column addresses corresponding to Write2. At a moment T5, burst write data Dn appears on a data bus, and eight burst writes are performed, so that the changed data blocks of the cache line corresponding to Write 1 and the cache line corresponding to Write3 are written into the memory device. Coll indicates a column address corresponding to the first data block of eight data blocks of the cache line corresponding to Write 1, and D1 indicates data corresponding to the first data block, and the rest can be deduced by analogy.

It should be noted that, in the foregoing embodiment, the present invention is described in detail by using an example in which two write commands Write 1 and Write3 are combined and the sum of the quantity of the changed data blocks of the cache line corresponding to Write 1 and the quantity of the changed data blocks of the cache line corresponding to Write3 is equal to BL. However, the present invention is not limited thereto. In another possible implementation manner, multiple write commands may be combined. For example, the sum of the quantity of the changed data blocks of the cache line corresponding to Write 1 and the quantity of the changed data blocks of the cache line corresponding to Write3 is less than the BL, other write commands that can be combined may be selected from the command queue. In addition, if a sum of quantities of change data blocks of cache lines corresponding to all write commands that can be combined in the command queue is less than the BL, burst writes whose quantity is equal to the BL are performed, and some clock cycles in the burst writes whose quantity is equal to the BL or some beats of a clock cycle are idle. In addition, FIG. 5 shows only three memory clocks (internal CK) of a dynamic random access memory (dynamic random access memory, DRAM). In fact, there are a total of eight memory clocks.

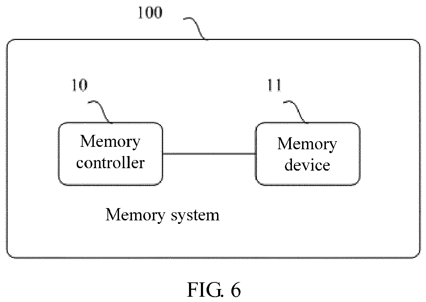

FIG. 6 is a schematic structural diagram of a memory system according to the present invention and is an apparatus embodiment corresponding to the embodiment of the present invention in FIG. 1; therefore, a specific implementation process is not described herein again. Specifically, a memory system 100 in this embodiment includes at least a memory controller 10 and a memory device 11.

Specifically, the memory controller 10 is configured to: receive change information sent by a cache, where the change information is information that is generated after the cache divides a first to-be-written cache line cache line of a last level cache (LLC) into at least one data block and that is used to indicate whether data in each of the at least one data block is changed; for each unchanged data block in which data is not changed as indicated by the change information, skip sending, according to the change information, a column address corresponding to each unchanged data block and data corresponding to each unchanged data block to the memory device; and for each changed data block in which data is changed as indicated by the change information, send, according to the change information, a column address corresponding to each changed data block and data corresponding to each changed data block to the memory device; and
the memory device 11 is configured to write, according to the column address corresponding to each changed data block and the data corresponding to each changed data block, data of a burst length into each changed data block, where the burst length is equal to a quantity of the at least one data block.

Further, the memory controller 10 is configured to: if a quantity of the changed data blocks of the first to-be-written cache line is equal to the burst length, send the column address corresponding to each changed data block and the data corresponding to each changed data block to the memory device 11.

The memory device 11 is configured to perform, according to each column address, the data write of the burst length on each changed data block of the first to-be-written cache line.

Further, the memory controller 10 is configured to: if a quantity of the changed data blocks of the first to-be-written cache line is less than the burst length, send the column address and the data corresponding to each changed data block of the first to-be-written cache line and a column address and data corresponding to each changed data block of at least one second to-be-written cache line to the memory device 11, where a sum of a quantity of the changed data blocks of the at least one second to-be-written cache line and the quantity of the changed data blocks of the first to-be-written cache line is less than or equal to the burst length; and
the memory device 11 is configured to perform, according to each column address of the first to-be-written cache line and each column address of the at least one second to-be-written cache line, the data write of the burst length on each changed data block of the first to-be-written cache line and each changed data block of the at least one second to-be-written cache line, where the second to-be-written cache line is a to-be-written cache line except the first to-be-written cache line in the LLC.

Further, the first to-be-written cache line and the at least one second to-be-written cache line are in a same row of a same storage group Bank, and there is no read command of the same row in the LLC.

Further, when column address buffers whose quantity is equal to the burst length and column decoders whose quantity is equal to the burst length are disposed on the memory device 11, where the number is equal to the burst length, the data write is performed on each changed data block by using an independent column address buffer and an independent column decoder.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the appended claims to which reference should be made.

## Claims

1. A data writing method, which is applied to a memory system (100) comprising a cache, a last level cache, a memory controller (10) and a memory device (11), and the method comprises:
receiving (101), by the memory controller (10), change information sent by the cache, wherein the change information is information that is generated after the cache divides a first to-be-written cache line of the last level cache, LLC, into at least two data blocks and that is used to indicate whether data in each of the at least two data blocks is changed;
for each unchanged data block in which data is not changed as indicated by the change information, skipping sending (102), by the memory controller (10) according to the change information, a column address corresponding to each unchanged data block and data corresponding to each unchanged data block to the memory device (11); and for each changed data block in which data is changed as indicated by the change information, sending (102), by the memory controller (10) according to the change information, a column address corresponding to each changed data block and data corresponding to each changed data block to the memory device (11);
writing (103), by the memory device (11) according to the column address corresponding to each changed data block and the data corresponding to each changed data block, data of a burst length into each changed data block, wherein the burst length is equal to a quantity of the at least two data blocks; and
wherein for each changed data block in which data is changed as indicated by the change information, the method further comprises:
if the quantity of the changed data blocks of the first to-be-written cache line is less than the burst length, sending the column address and the data corresponding to each changed data block of the first to-be-written cache line and a column address and data corresponding to each changed data block of at least one second to-be-written cache line to the memory device (11), wherein a sum of a quantity of the changed data blocks of the at least one second to-be-written cache line and the quantity of the changed data blocks of the first to-be-written cache line is less than or equal to the burst length; and
performing, by the memory device (11) according to each column address of the first to-be-written cache line and each column address of the at least one second to-be-written cache line, the data write of the burst length on each changed data block of the first to-be-written cache line and each changed data block of the at least one second to-be-written cache line, wherein the second to-be-written cache line is a to-be-written cache line except the first to-be-written cache line in the LLC;
wherein the first to-be-written cache line and the at least one second to-be-written cache line are in a same row.

2. A memory system (100), comprising a cache, a last level cache, a memory controller (10) and a memory device (11), wherein:
the memory controller (10) is configured to: receive change information sent by the cache, wherein the change information is information that is generated after the cache divides a first to-be-written cache line cache line of the last level cache, LLC, into at least two data block and that is used to indicate whether data in each of the at least two data block is changed; for each unchanged data block in which data is not changed as indicated by the change information, skip sending, according to the change information, a column address corresponding to each unchanged data block and data corresponding to each unchanged data block to the memory device (11); and for each changed data block in which data is changed as indicated by the change information, send, according to the change information, a column address corresponding to each changed data block and data corresponding to each changed data block to the memory device (11); and
the memory device (11) is configured to write according to the column address corresponding to each changed data block and the data corresponding to each changed data block, data of a burst length into each changed data block, wherein the burst length is equal to a quantity of the at least two data block;
wherein the memory controller (10) is further configured to: if the quantity of the changed data blocks of the first to-be-written cache line is less than the burst length, send the column address and the data corresponding to each changed data block of the first to-be-written cache line and a column address and data corresponding to each changed data block of at least one second to-be-written cache line to the memory device (11), wherein a sum of a quantity of the changed data blocks of the at least one second to-be-written cache line and the quantity of the changed data blocks of the first to-be-written cache line is less than or equal to the burst length; and
the memory device (11) is configured to perform, according to each column address of the first to-be-written cache line and each column address of the at least one second to-be-written cache line, the data write of the burst length on each changed data block of the first to-be-written cache line and each changed data block of the at least one second to-be-written cache line, wherein the second to-be-written cache line is a to-be-written cache line except the first to-be-written cache line in the LLC;
wherein the first to-be-written cache line and the at least one second to-be-written cache line are in a same row.

## Patentansprüche

1. Datenschreibverfahren, das auf ein Speichersystem (100) angewendet wird, das einen Cache, einen "Last Level Cache", eine Speichersteuerung (10) und eine Speichervorrichtung (11) umfasst, und das Verfahren umfasst:
Empfangen (101) von Änderungsinformationen, die von dem Cache gesendet werden, durch die Speichersteuerung (10), wobei die Änderungsinformationen Informationen sind, die erzeugt werden, nachdem der Cache eine erste zu schreibende Cachezeile des "Last Level Cache", LLC, in mindestens zwei Datenblöcke unterteilt hat und die verwendet werden, um anzuzeigen, ob Daten in jedem der mindestens zwei Datenblöcke geändert werden;
für jeden unveränderten Datenblock, in dem Daten nicht gemäß den Änderungsinformationen geändert werden, Überspringen des Sendens (102), durch die Speichersteuerung (10) gemäß den Änderungsinformationen, eine Spaltenadresse entsprechend jedem unveränderten Datenblock und Daten entsprechend jedem unveränderten Datenblock an die Speichervorrichtung (11); und für jeden geänderten Datenblock, in dem Daten gemäß den Änderungsinformationen geändert werden, Senden (102) durch die Speichersteuerung (10) gemäß den Änderungsinformationen, eine Spaltenadresse entsprechend jedem geänderten Datenblock und Daten entsprechend jedem geänderten Datenblock an die Speichervorrichtung (11);
Schreiben (103) von Daten einer Burstlänge in jeden geänderten Datenblock durch die Speichervorrichtung (11) gemäß der Spaltenadresse, die jedem geänderten Datenblock entspricht, und den Daten, die jedem geänderten Datenblock entsprechen, wobei die Burstlänge gleich einer Menge der mindestens zwei Datenblocks ist; und
wobei für jeden geänderten Datenblock, in dem Daten geändert werden, wie durch die Änderungsinformationen angezeigt, das Verfahren ferner umfasst:
wenn die Menge der geänderten Datenblöcke der ersten zu schreibenden Cachezeile kleiner als die Burstlänge ist, Senden der Spaltenadresse und der Daten, die jedem geänderten Datenblock der ersten zu schreibenden Cachezeile entsprechen, und einer Spaltenadresse und Daten, die jedem geänderten Datenblock von mindestens einer zweiten zu schreibenden Cachezeile an die Speichervorrichtung (11) entsprechen, wobei eine Summe aus einer Menge der geänderten Datenblöcke der mindestens einen zweiten zu schreibenden Cachezeile und der Menge der geänderten Datenblöcke der ersten zu schreibenden Cachezeile kleiner oder gleich der Burstlänge ist; und
Durchführen des Datenschreibens der Burstlänge auf jeden geänderten Datenblock der ersten zu schreibenden Cachezeile und jeden geänderten Datenblock der mindestens einen zweiten zu schreibenden Cachezeile durch die Speichervorrichtung (11) gemäß jeder Spaltenadresse der ersten zu schreibenden Cachezeile und jeder Spaltenadresse der ersten zu schreibenden Cachezeile, wobei die zweite zu schreibende Cachezeile eine zu schreibende Cachezeile mit Ausnahme der ersten zu schreibenden Cachezeile in dem LLC ist;
wobei die erste zu schreibende Cachezeile und die mindestens eine zweite zu schreibende Cachezeile in einer gleichen Zeile stehen.

2. Speichersystem (100), umfassend einen Cache, einen "Last Level Cache", eine Speichersteuerung (10) und eine Speichervorrichtung (11), wobei:
die Speichersteuerung (10) konfiguriert ist zum: Empfangen von Änderungsinformationen, die vom Cache gesendet werden, wobei die Änderungsinformationen Informationen sind, die erzeugt werden, nachdem der Cache eine erste zu schreibende Cachezeile des "Last Level Cache", LLC, in mindestens zwei Datenblocks unterteilt hat und die verwendet werden, um anzuzeigen, ob Daten in jedem der mindestens zwei Datenblocks geändert werden; für jeden unveränderten Datenblock, in dem Daten nicht geändert werden, wie durch die Änderungsinformationen angegeben, Überspringen des Sendens gemäß den Änderungsinformationen einer Spaltenadresse, die jedem unveränderten Datenblock entspricht, und Daten, die jedem unveränderten Datenblock für die Speichervorrichtung (11) entsprechen; und
für jeden geänderten Datenblock, in dem Daten geändert werden, wie durch die Änderungsinformationen angezeigt, Senden einer Spaltenadresse entsprechend jedem geänderten Datenblock und Daten entsprechend jedem geänderten Datenblock an die Speichervorrichtung (11); und
die Speichervorrichtung (11) konfiguriert ist, um gemäß der Spaltenadresse, die jedem geänderten Datenblock und den Daten, die jedem geänderten Datenblock entsprechen, Daten mit einer Burstlänge in jeden geänderten Datenblock zu schreiben, wobei die Burstlänge gleich einer Menge der mindestens zwei Datenblocks ist;
wobei die Speichersteuerung (10) ferner konfiguriert ist zum: wenn die Menge der geänderten Datenblöcke der ersten zu schreibenden Cachezeile kleiner als die Burstlänge ist, Senden der Spaltenadresse und der Daten, die jedem geänderten Datenblock der ersten zu schreibenden Cachezeile entsprechen, und einer Spaltenadresse und Daten, die jedem geänderten Datenblock von mindestens einer zweiten zu schreibenden Cachezeile an die Speichervorrichtung (11) entsprechen, wobei eine Summe aus einer Menge der geänderten Datenblöcke der mindestens einen zweiten zu schreibenden Cachezeile und der Menge der geänderten Datenblöcke der ersten zu schreibenden Cachezeile kleiner oder gleich der Burstlänge ist; und
die Speichervorrichtung (11) konfiguriert ist, um gemäß jeder Spaltenadresse der ersten zu schreibenden Cachezeile und jeder Spaltenadresse der mindestens einen zweiten zu schreibenden Cachezeile das Datenschreiben der Burstlänge auf jeden geänderten Datenblock der ersten zu schreibenden Cachezeile und jeden geänderten Datenblock der mindestens einen zweiten zu schreibenden Cachezeile durchzuführen, wobei die zweite zu schreibende Cachezeile eine zu schreibende Cachezeile ist, mit Ausnahme der ersten zu schreibenden Cachezeile in der LLC; wobei die erste zu schreibende Cachezeile und die mindestens eine zweite zu schreibende Cachezeile in einer gleichen Zeile stehen.

## Revendications

1. Procédé d'écriture de données, lequel est appliqué à un système de mémoire (100) comprenant une mémoire cache, une mémoire cache de dernier niveau, un contrôleur de mémoire (10) et un dispositif de mémoire (11) et le procédé comprend :
la réception (101), par le contrôleur de mémoire (10), d'informations de changement envoyées par la mémoire cache, les informations de changement étant des informations qui sont générées après que la mémoire cache divise une première ligne de cache à écrire de la mémoire cache de dernier niveau, LLC, en au moins deux blocs de données et qui sont utilisées pour indiquer que des données dans chacun des au moins deux blocs de données sont changées ou non ;
pour chaque bloc de données inchangé dans lequel des données ne sont pas changées comme cela est indiqué par les informations de changement, le saut de l'envoi (102), par le contrôleur de mémoire (10), conformément aux informations de changement, d'une adresse de colonne correspondant à chaque bloc de données inchangé et de données correspondant à chaque bloc de données inchangé au dispositif de mémoire (11) ; et pour chaque bloc de données changé dans lequel des données sont changées comme cela est indiqué par les informations de changement, l'envoi (102), par le contrôleur de mémoire (10) conformément aux informations de changement, d'une adresse de colonne correspondant à chaque bloc de données changé et de données correspondant à chaque bloc de données changé au dispositif de mémoire (11) ;
l'écriture (103), par le dispositif de mémoire (11) conformément à l'adresse de colonne correspondant à chaque bloc de données changé et aux données correspondant à chaque bloc de données changé, de données d'une longueur de salve dans chaque bloc de données changé, la longueur de salve étant égale à une quantité des au moins deux blocs de données ; et
le procédé comprenant en outre pour chaque bloc de données changé dans lequel des données sont changées comme cela est indiqué par les informations de changement :
si la quantité des blocs de données changés de la première ligne de cache à écrire est inférieure à la longueur de salve, l'envoi de l'adresse de colonne et des données correspondant à chaque bloc de données changé de la première ligne de cache à écrire et d'une adresse de colonne et de données correspondant à chaque bloc de données changé d'au moins une deuxième ligne de cache à écrire au dispositif de mémoire (11), dans lequel une somme d'une quantité des blocs de données changés de l'au moins une deuxième ligne de cache à écrire et de la quantité des blocs de données changés de la première ligne de cache à écrire est inférieure ou égale à la longueur de salve ; et
l'exécution, par le dispositif de mémoire (11) conformément à chaque adresse de colonne de la première ligne de cache à écrire et à chaque adresse de colonne de l'au moins une deuxième ligne de cache à écrire, de l'écriture de données de la longueur de salve sur chaque bloc de données changé de la première ligne de cache à écrire et chaque bloc de données changé de l'au moins une deuxième ligne de cache à écrire, dans lequel la deuxième ligne de cache à écrire est une ligne de cache à écrire autre que la première ligne de cache à écrire dans le LLC ;
dans lequel la première ligne de cache à écrire et l'au moins une deuxième ligne de cache à écrire se trouvent dans une même rangée.

2. Système de mémoire (100), comprenant une mémoire cache, une mémoire cache de dernier niveau, un contrôleur de mémoire (10) et un dispositif de mémoire (11), dans lequel :
le contrôleur de mémoire (10) est configuré pour : recevoir des informations de changement envoyées par la mémoire cache, dans lequel
les informations de changement sont des informations qui sont générées après que la mémoire cache divise une première ligne de cache à écrire de la mémoire cache de dernier niveau, LLC, en au moins deux blocs de données et qui sont utilisées pour indiquer que des données dans chacun des au moins deux blocs de données sont changées ou non ; pour chaque bloc de données inchangé dans lequel des données ne sont pas changées comme cela est indiqué par les informations de changement, sauter l'envoi, conformément aux informations de changement, d'une adresse de colonne correspondant à chaque bloc de données inchangé et de données correspondant à chaque bloc de données inchangé au dispositif de mémoire (11); et pour chaque bloc de données changé dans lequel des données sont changées comme cela est indiqué par les informations de changement, envoyer, conformément aux informations de changement, une adresse de colonne correspondant à chaque bloc de données changé et des données correspondant à chaque bloc de données changé au dispositif de mémoire (11) ; et
le dispositif de mémoire (11) est configuré pour écrire conformément à l'adresse de colonne correspondant à chaque bloc de données changé et aux données correspondant à chaque bloc de données changé, des données d'une longueur de salve dans chaque bloc de données changé, dans lequel la longueur de salve est égale à une quantité des au moins deux blocs de données ;
dans lequel le contrôleur de mémoire (10) est configuré en outre pour : si la quantité des blocs de données changés de la première ligne de cache à écrire est inférieure à la longueur de salve, envoyer l'adresse de colonne et les données correspondant à chaque bloc de données changé de la première ligne de cache à écrire et une adresse de colonne et des données correspondant à chaque bloc de données changé d'au moins une deuxième ligne de cache à écrire au dispositif de mémoire (11), dans lequel une somme d'une quantité des blocs de données changés de l'au moins une deuxième ligne de cache à écrire et de la quantité des blocs de données changés de la première ligne de cache à écrire est inférieure ou égale à la longueur de salve ; et
le dispositif de mémoire (11) est configuré pour exécuter, conformément à chaque adresse de colonne de la première ligne de cache à écrire et chaque adresse de colonne de l'au moins une deuxième ligne de cache à écrire, l'écriture de données de la longueur de salve sur chaque bloc de données changé de la première ligne de cache à écrire et chaque bloc de données changé de l'au moins une deuxième ligne de cache à écrire, dans lequel la deuxième ligne de cache à écrire est une ligne de cache à écrire autre que la première ligne de cache à écrire dans le LLC ;
dans lequel la première ligne de cache à écrire et l'au moins une deuxième ligne de cache à écrire se trouvent dans une même rangée.
